Europäisches Patentamt

European Patent Office

Office européen des brevets

(11) Publication number: **0 305 092 B1**

(12) **EUROPEAN PATENT SPECIFICATION**

(45) Date of publication of patent specification: **29.07.92**  (51) Int. Cl.⁵: **B31D 3/02**

(21) Application number: **88307493.2**

(22) Date of filing: **12.08.88**

(54) **Expandable collapsible product and method and apparatus for its manufacture.**

(30) Priority: **28.08.87 US 90766**

(43) Date of publication of application:
**01.03.89 Bulletin 89/09**

(45) Publication of the grant of the patent:
**29.07.92 Bulletin 92/31**

(84) Designated Contracting States:
**AT BE CH DE ES FR GB GR IT LI NL SE**

(56) References cited:
**EP-A- 0 227 247**     **DE-A- 1 949 823**
**FR-A- 1 577 304**     **US-A- 2 082 323**
**US-A- 4 069 857**     **US-A- 4 625 786**

(73) Proprietor: **HUNTER DOUGLAS INTERNATION-AL NV**
**Kaya Flamboyan 11**
**Rooi Catootje Curacao(AN)**

(72) Inventor: **Neff, Craig A.**
**11893 Hillcrest Road**
**Golden Colorado 80403(US)**

(74) Representative: **Allen, William Guy Fairfax et al**
**J.A. KEMP & CO. 14 South Square Gray's Inn**
**London WC1R 5EU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an expandable, collapsible product for use as a window shade and methods and apparatus used in the manufacture thereof.

Known products of this type generally comprise folded sheets with selected folds connected to provide an elongated hollow channel. For example, US-A-4 450 027 shows a honeycomb material wherein a plurality of elongate tubes are stacked on top of each other and secured by adhesive to provide a hollow window cover.

Similar products are shown in US-A-4 603 072 and 4 631 108. Another type of construction which produces a hollow article is shown in US-A-4 685 986 wherein two folded sheets are secured together at selected creases to produce the final product. Other disclosures of honeycomb structures may be found in US-A-4 631 217, 4 676 855, 4 677 012 and 4 677 013. In US-A-4 625 786, two folded sheets are secured together along the faces of selected folded portions to produce the honeycomb structure.

The structure of a honeycomb product is important with respect to the methods and apparatus required for its manufacture. US-A-4 685 986 (EP-A-227 247) describes a manufacturing technique wherein folded sheets of material are advanced toward each other while a centrally-located apparatus attached selected creases of the two sheets to hold the sheets together and produce the product. US-A-4 450 027 shows another technique which is to produce a single elongate tube which is wound around itself after adhesive is applied to provide an oblong coil of the hollow tubular element. The ends of the coil are then cut off leaving the centre sections as the finished product.

According to one aspect of the present invention, there is provided a method of manufacturing an integral expandable, collapsible product having a row of parallelly arranged, transversely extending hollow cells therein, comprising the steps of folding a first and a second sheet of flexible material to provide a plurality of first transverse creased pleats therein, said first pleats projecting to one side of the first sheet and to one side of said second sheet, respectively, folding the first sheet and the second sheet to provide a plurality of folds therein, each of said folds projecting to the other side of said first sheet and said second sheet respectively between two of said first transverse creased pleats, modifying at least certain of the folds of the first sheet by securing parts of said folded material together to form first legs, positioning said first and second sheets, so that the other side of said first sheet faces the other side of said second sheet, and characterised by combining said first and second sheets so that said first legs are each secured at their free edges to the free edge of a separate fold of said second sheet.

Such a method can be far more economical to be carried out and allows for great versatility in the final construction of the product.

Depending on the form of structure which it is intended to provide, each fold of the first sheet may be so modified as to form a first leg or certain of the folds of the first sheet may be creased to provide second transverse crease pleats between and alternating with the first leg in a preselected order. If this is done, the second pleats formed in the first sheet may be given a lesser height than the first legs formed in the first sheet and this may be used in one of two ways as will be explained below. At least certain of the folds of the second sheet may be creased to provide a plurality of second transverse creases pleats projecting to the other side of the second sheet. It will be appreciated that not all of the folds of the second sheet may be so creased but, in one construction, each fold of the second sheet is creased to provide a second creased pleat.

In a similar way to the first sheet, at least certain of the folds of the second sheet may be modified by securing parts of the folded material together to form second legs and, when said first and second sheets are combined, said second legs may each be secured to a separate fold of the first sheet.

The second legs may be utilized in a number of different ways. For example, the second legs can be attached to the second transverse pleats in the first sheet. Alternatively, they can be attached to first legs of the first sheet, in either event forming the separation between two adjacent transverse cells. It will be appreciated that the free edge of a first leg or a second leg can contact the free edge of the second leg or a first leg respectively, or the free edge of a crease on the other sheet, or indeed simply an uncreased fold of the other sheet. In any of these arrangements, however, the separation between the two cells is formed by two thicknesses of sheet material only.

It is also contemplated that the second transverse pleats in the second legs of the second sheet are formed alternately in a predetermined order and that the second pleats should be given a lesser height than the second legs.

The folds may be modified to produce the legs, by placing the line of adhesive in the folds and pressing the parts together. The step of securing the legs may comprise placing a line of adhesive along the contact line of a first or second leg and/or along the relevant line of the other sheet and heating the line with adhesive. If the adhesive is a hot melt adhesive, the step of heating may comprise irradiating the adhesive with an electromagnetic radiation, preferably with a laser beam forming a line of the adhesive. The first and second sheets may be identical and consist of pieces of one and the same sheet of material manufactured by the same machine or machines and it is also possible that, while they are cut from one sheet, the first and second sheets are oppositely positioned in mirror-like fashion, with the first and second legs facing each other either in aligned or offset positions at the location where the first and second sheets combine and are mutually secured.

According to another aspect of the present invention, there is provided an expandable, collapsible product e.g. for forming a window covering and having an integral row of parallelly arranged, transverse, hollow, cross-sectionally closed cells, comprising continuous first and second sheets, each sheet having a plurality of first transverse creased pleats on one side of the sheet and a plurality of transverse continuous projections on the other side of the sheet, at least some of the projections on at least one sheet being in the form of folds, part of said folds being secured together to form legs, characterised in that said first and second sheets are fixedly secured together by securing legs from one sheet to legs or projections on the other at the free edges of the legs and projections of the first and second sheets along the length thereof, so that a portion of the circumference of a cell, invisible from the front or back of the finished product and common to two immediately adjoining cells, comprises at any point two layers of a single sheet material, formed by doubling said sheet material back on itself and securing it together.

For the best visual effect, the first and second sheets are preferably made from an opaque or semi-opaque material.

The invention further contemplates apparatus for providing an expendable collapsible product as defined above. motions whereby said pleats of two different heights are formed.

The means for controlling the motion of the pleat bar may comprise a cam having differently sized lobes thereon and heater means may be provided for heating the material, these including a bottom discharge heater for heating the lower surface of the material after it has been pleated and this may be in the form of a flat stone e.g. of granite.

According to yet another aspect of the invention, there is provided apparatus for combining first and second sheets of material transversely pleated and having projections, some of which, on at least one sheet are formed as folds, the parts of which are secured together to form legs, said apparatus comprising means for advancing said first and second sheets towards each other, indexing means for engaging respective first pleats in each of said first and second sheets and for establishing a predetermined relative position between said first and second sheets, means for positioning respective projections, legs and pleats in each of said first and second sheets in a predetermined relative position, and means for placing a line of adhesive on the edges of said projections and/or legs to secure said first and second sheets together, characterised by means securing the edges of the legs of one sheet to the edges of the legs or projections on the other sheet.

The invention also proposes apparatus as defined above for controlling the feed of a sheet of material and which further comprises two laterally spaced support posts, a toothed rack on each post, first and second carriages each mounted on a respective post for movement along said posts, a shaft connecting said carriages, said shaft having pinions at opposite ends for engaging respective ones of said racks, and roller means for engaging said material and applying tension thereto.

Also contemplated is apparatus as defined above which for gluing two articles together comprises hot melt adhesive dispensing means, track means for carrying said dispensing means, and electromagnetic means for irradiating hot melt adhesive after it has been dispensed by said dispensing means, wherein said electromagnetic means is preferably in the form of a laser.

In order that the invention may more readily be understood, the following description is given, merely by way of example, reference being made to the accompanying drawings, in which:-

Figure 1 is a schematic view of one method for assembling one form of product in accordance with the invention;

Figure 2 is a schematic diagram of a mechanism for securing two sheets of pleated material to form a product in accordance with the invention;

Figure 3 is a side view of a material-feeding apparatus in accordance with the invention;

Figure 4 is a side view of a tensioning apparatus shown in Figure 3;

Figure 5 is a schematic diagram of a pleating machine in accordance with the invention;

Figure 6 is a schematic perspective of a portion of the pleating machine shown in Figure 5;

Figure 7 is an end view of a machine for modifying the pleated fabric in accordance with the invention;

Figure 8 is an end view of an adhesive applying apparatus for use with the apparatus of Figure 7;

Figure 9 is an end view of a machine for securing two sheets together using the process shown in Figure 2;

Figure 10 is a front view of a preferred glue-applying apparatus with the machine of Figure 9; and

Figures 11 to 13 are each a schematic cross-section of several embodiments of expansible, collapsible product according to the invention.

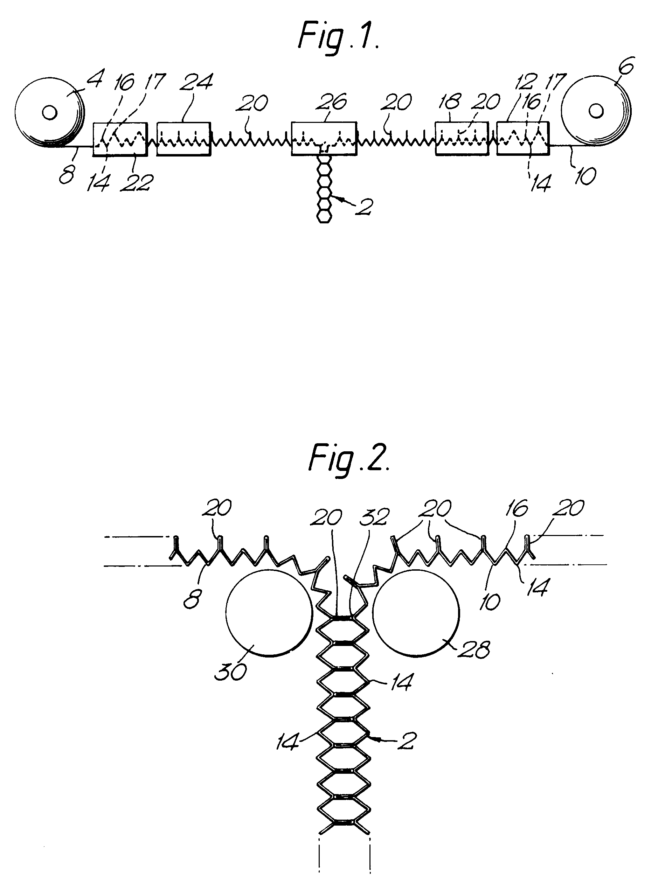

Figure 1 is a schematic diagram of a method for forming an expansible, collapsible product 2 in accordance with the invention. The product is formed by the combination of two sheets of opaque or semi-opaque fabric, and these sheets are supplied from rolls 4 and 6 at opposite ends of an assembly for manufacture of the expansible collapsible product 2. A first sheet of fabric 8 from roll 4 and a second sheet of fabric 10 from roll 6 are preferably subjected to identical treatments so that two substantially identical sheets are combined to produce the product 2. It will be appreciated, however, that other products may be manufactured by subjecting sheets 8 and 10 to different treatments and that a product similar to the product produced by the method of Figure 1 may be made by combining two sheets which have been subjected to different treatments.

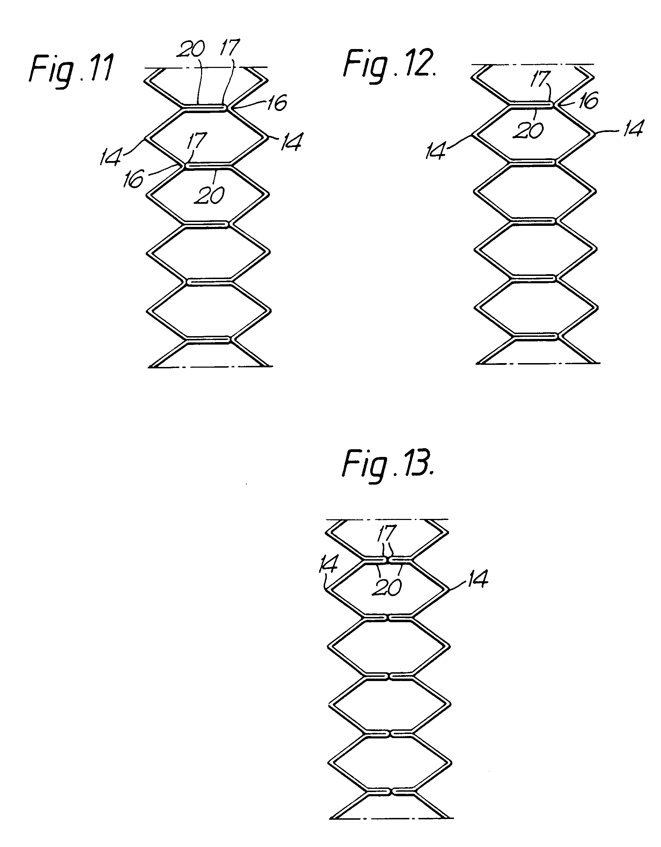

The first sheet 8 and the second sheet 10 are passed through pleating machines 22 and 12 respectively, these providing first pleats 14 on one side of each sheet, and second pleats 16, 17 on the other side of each sheet. The pleats 17 are formed to be longer than the pleats 16 (see Figure 11). Preferably, fabric 10 is a polyester which maintains a crease when folded in the presence of heat, and this process will be described more fully below. After the pleating operation, sheet 10 is passed through a modifier 18 and sheet 8 through a modifier 24, to modify the second pleats 17 to provide legs 20. The process for forming legs 20 will be described more fully below, but at this point it may be noted that legs 20 are formed by securing two parts of the larger pleats together.

The pleated and modified sheets 8 and 10 are combined in an indexing and joining machine 26, and the finished product 2 exits downwardly.

Figures 12 to 15 show modified structures of the expansable collapsible product of the invention, which can be made by relatively minor alterations to the method and apparatus described. While in Figures 1, 2 and 11, alternate second creases 17 are made larger than the other second creases 16, for both of the sheets 8 and 10, in Figure 12, all of the second creases 17 of the first sheet 8 are made larger than all of the second creases 16 of the second sheet 10. These second creases 17 are modified to form first legs 20, as before, but none of the shorter creases 16 of the second sheet 10 are modified.

In the construction shown in Figure 13, all of the second creases 17 of the first sheet 8 and of the second sheet 10 are made longer than the first creases 14, but not as long as in Figures 11 and 12, and the longer second creases 17 are all modified to form first and second legs 20 which are of the same length as each other and abut in the centre.

It will observed that in each of these constructions the separation between two adjacent cells formed by two thicknesses of sheet material over the full length of this separation.

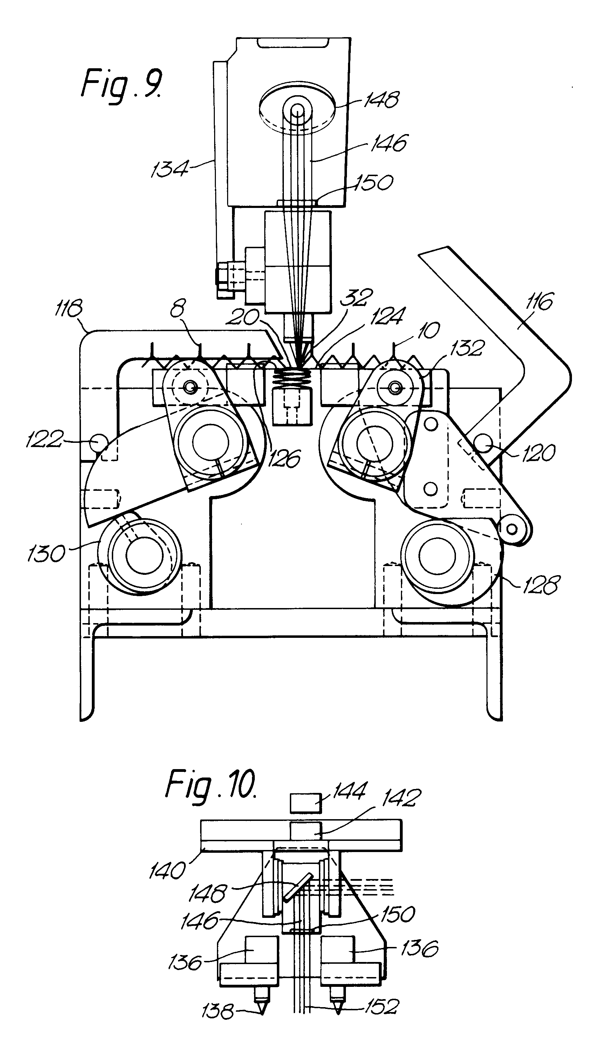

Figure 2 is a schematic enlargement of the indexing and joining operation carried out in machine 26. Indexing jaws 28 and 30, shown only schematically, are placed on opposite sides of a gap into which modified sheets 8 and 10 are fed. Jaws 28 and 30 perform an indexing function whereby the creases in sheets 8 and 10 are aligned. Then, a plate which viii be described more thoroughly with respect to Figure 9 engages a loose leg 20 and moves it into position adjacent a shorter second crease 16 such as shown at 32 in Figure 2, and a cementing operation takes place to join the end of leg 20 to the crease 32.

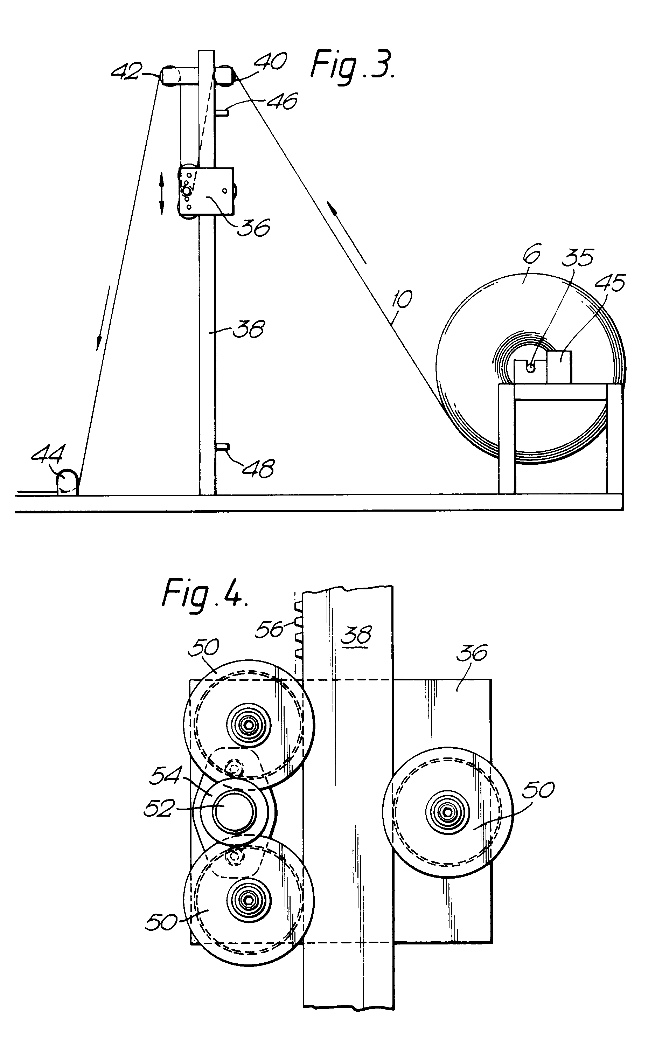

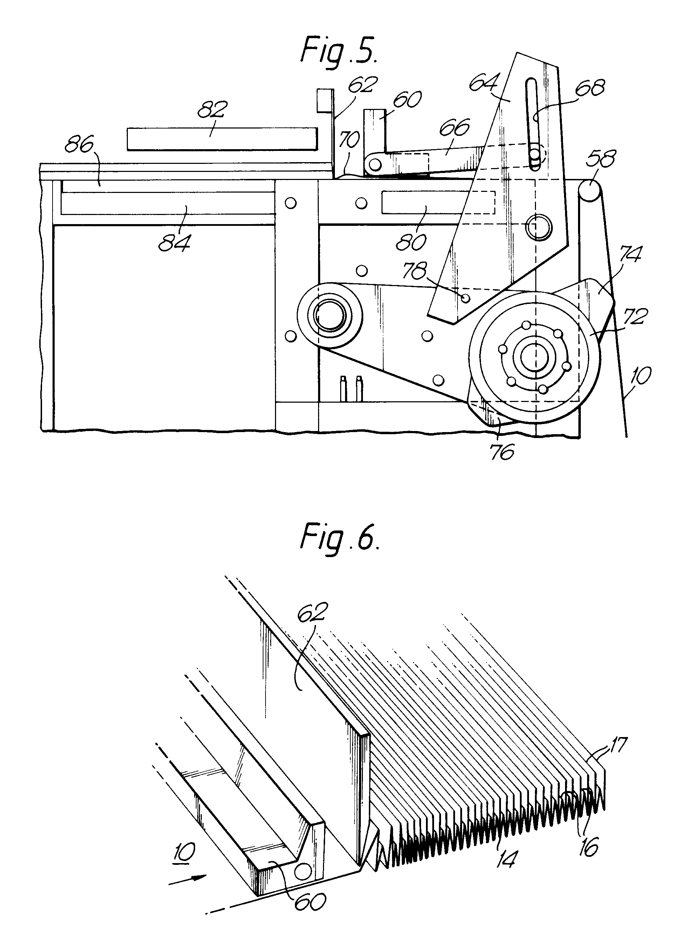

With reference to Figure 3, the preferred apparatus for supplying material will be described. A roll 6 of material 10 is supported on an axle 35 mounted on a stand 34. A movable carriage 36 is mounted on a post 38, and an identical laterally spaced structure is on an opposite side of the apparatus but cannot be seen in Figure 3, because they are directly behind the carriage 36 and the part 38 which can be seen. Material 10 is fed from roll 6 over a roller 40, under a roller 54 (Figure 4) mounted between the two carriages 36, and over a second roller 42. The material is then passed under a roller 44 for providing a repair walkway, and the material is then directed into a pleater which will be described with respect to Figures 5 and 6.

Rotation of roll 6 is controlled by a motor 45 which includes a geared shaft which engages a gear on the axle 35 supporting the roll of fabric. Carriage 36 is provided with a predetermined weight which will in turn place a predetermined tension on sheet 10. As the material is fed into the pleating machine, carriage 36 moves upwardly because motor 44 prevents rotation of roll 6 during this period. When carriage 36 reaches an uppermost position, a sensor 46 causes motor 44 to allow roll 6 to unwind, thus allowing movable carriage 36 to move downwardly. When carriage 36 reaches the bottom of post 38, sensor 48 is activated, and motor 44 is instructed to secure roll 6 from further rotation. It will be appreciated that this operation maintains a constant tension on sheet 10 which allows the subsequent operations to be accurately controlled.

A unique feature of the mechanism shown in Figure 3 is shown more clearly in Figure 4. The two carriages 36 have mounted thereon three rollers 50. These rollers engage the respective post 38 to allow smooth, even movement of carriage 36 along post 38. A shaft 52 extends across the width of the feeding apparatus to the other carriage and carries the roller 54, which is mounted for free rotation about shaft 52 and also extends substantially across the width of the feeding apparatus. Sheet 10 passes under roller 54 as shown in Figure 3. A gear (not illustrated) is fixed to each end of shaft 52 and engages a toothed rack 56 which is secured on each post 38; the racks are adjusted so that the teeth are in level alignment. Thus, carriage 36 on one side of the material feeding appartatus moves exactly in the same manner as does the similar carriage on the opposite side of the material feeding apparatus. This causes the material 10 to be fed evenly into the pleater.

The pleater 12 (which is a mirror image of pleater 22) will be described with respect to Figures 5 and 6. Material 10 is directed into the pleating machine by passing over a roller 58, is fed under a pleating bar 60, and is held by a knife edge 62. The pleating bar 60 is caused to reciprocate by the motion of a plate 64 which is connected to the pleating bar 60 by a link 66. A slot 68 permits adjustment of the location of the link with respect to plate 64. The general use of a pleating bar 60 to cooperate with knife edge 62 to form pleats is known in the art, and the apparatus shown in Figure 5 is a modififcation of a pleating machine manufactured by Enguda of Taiwan.

Sheet 10 passes under pleating bar 60 and engages a part of the bar so that as the pleating bar moves forwardly toward knife edge 62, sheet 10 is folded upwardly, such as at 70 to form a fold or pleat. As pleating bar 60 moves closer to knife edge 62, fold 70 becomes tightly compressed to make a straight crease. Then, knife edge 62 moves upwardly to allow the fold to move to the far side of knife edge 62, pleating bar 60 moves in a rearward direction and then moves toward knife edge 62 again to create a subsequent fold. As shown, the pleating machine provides folds of alternately varying heights so that legs 20, as described with respect to Figure 1, 2 and 11 may be provided.

The prior art machine is modified to nclude a cam 72 having lobes 74 and 76 thereon. When taller lobe 74 engages cam follower 78 on plate 64, pleating bar 60 is caused to make a large rearward motion, thus creating a large fold during the forward motion. When cam follower 78 engages a shorter lobe 76, pleating bar 60 moves a shorter distance rearwardly and thus forms a shorter fold during the forward motion.

It will be appreciated that cam plate 72 causes rearward motions of pleating bar 60 of different lengths to provide pleats of different heights.

The end product of the described motions of pleating bar 60 may be seen with more clarity in Figure 6. Folds 17 are taller than folds 16, the smaller folds 16 being formed by shorter rearward movements of pleating bar 60 and the taller folds 17 being formed by larger rearward movements pleating bar 60.

The preferred material to be pleated is a polyester material which is capable of heat-setting. Thus, a front heater 80 is provided to heat the material 8 and 10 prior to being folded, and top discharge heater 82 and bottom discharge heater 84 are placed in the discharge region to provide additional heat at the locations of the creases to set thoroughly the folds in the material.

It is desirable that the folds have straight crease lines, and in the preferred embodiment, a plate 86 is used between the bottom discharge heater and the lower surface of the folded material to transmit heat to the material. This plate is preferably a piece of granite approximately 25 mm thick which, it has been discovered, provides a flat, non-warping surface with a high heat capacity which delivers exceptional results in the pleating process.

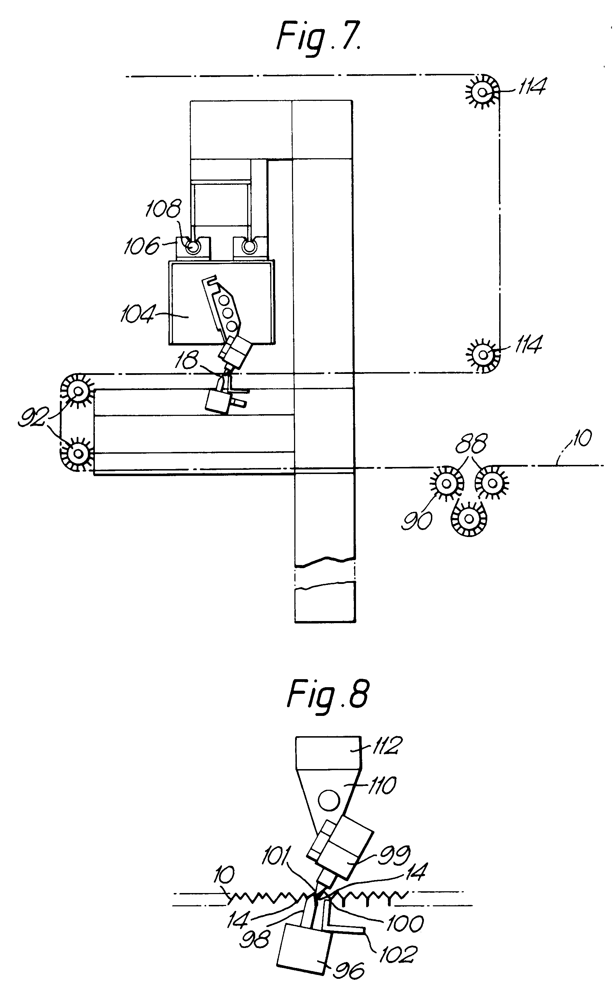

After the material has been pleated as shown in Figure 6, it is subjected to a modifier 18, 24 which produces legs 20. A preferred form of a modifier is shown in Figure 7. Pleated material 8 or 10 is fed into the modifier by drive rollers 88, which have elongate plates 90 for engaging folds of the material being fed. This allows the material to be fed into the machine with great precision so that individual folds 17 may be modified. The passage of material 10 around rollers 88 is shown only schematically in Figure 7. After leaving rollers 88, the material 10 passes around rollers 92 and is then fed into a modifying apparatus 18, which, as shown in Figure 8, includes a vacuum box 96 and a pair of jaws 98 and 100. Material is fed into the gap between opened jaws 98 and 100 by the rollers, and when a large fold 17 is in location between the jaws 98 and 100, a vacuum is applied to the vacuum box 96 to pull the fold into the desired location between the jaws. Then, a glue dispenser 99 is activated to deposit a line of hot-melt adhesive 101 in a predetermined location inside the fold 17. After the glue has been deposited, and before it cools, jaw 100 is caused to pivot by actuator 102 whereby it presses two parts of fold 17 together until adhesive 101 cools. Then, rollers 88 and 92, and other rollers in the system, are activated to advance the sheet until a subsequent large fold 17 is placed in the gap between jaws 98 and 100, and the process continues. After this operation, legs 20 described with respect to Figures 1 and 2 have been formed.

Figure 7 shows a preferred orientation of glue dispenser 99 as being mounted on a mounting plate 104 which is in turn supported by bearings 106 which engage rails 108. A motor is then activated to drive mounting plate 104 and glue dispenser 99 in a linear direction along the fold 17 to deposit the line of glue 101.

A preferred arrangement is shown in Figure 8 wherein the glue dispenser 97 is carried by a movable plate 110 of a linear motor 112, the use of which is highly advantageous because of its lack of vibration and its high speed. By the use of the apparatus shown in Figure 8, a straight line of adhesive 101 is rapidly placed in the desired location between the parts of fold 17.

After the sheet 10 has emerged from the gluing station, it passes around subsequent rollers 114 which direct it to an indexing and joining machine 26. As shown in Figure 8, the second sheet 10 is directed into the indexing and joining machine from the right, and the first sheet 8 is directed into the machine from the left. Arms 116 and 118, which are generally U-shaped in plan, are pivotally mounted for rotation about respective pivots 120 and 122. As the sheets 8 and 10 are advanced through the indexing and joining apparatus, arms 116 and 118 are raised to allow the material to be advanced. Indexing jaws 124 and 126 engage respective pleats of sheets 8 and 10 to position the sheets accurately with respect to each other whereby a leg 20 may be secured to a crease 32 as described above with respect to Figure 2. After the jaws 124 and 126 have accurately positioned the two sheets, one of the arms 116 or 118 is pivoted downwardly to a position as shown in Figure 9 whereby a leg 20 is engaged and held in a position wherein its remote end abuts a crease 32. During this operation, the other arm is in a raised position, the other arm being pivoted downwardly during the next operation in sequence, while the first arm is raised. In this manner, the alternate legs are alternately pressed into the proper position by arms 116 and 118 operating in sequence. The arms are preferably pneuamtically operated, but other mechanisms may be employed.

Jaws 124 and 126 are controlled by cams 128 and 130, only one pair of the cams being shown in Figure 9. These cams operate two mechanisms, one of which carries a jaw 124 or 126. A first cam 130 causes a jaw mounting block 132 to move outwardly, while the second cam 128 causes the jaw to pivot with respect to the mounting block 132. Thus, the jaw 124 or 126 moves in a somewhat elliptical path so that it engages individual creases of the sheets 8 and 10 to bring the sheets into a desired alignment.

As noted, when the sheets are in the desired alignment, an arm 116 or 118 pivots downwardly to urge leg 20 into a position such that one end of leg 20 is immediately adjacent a crease 32. Then, a line of hot-melt adhesive is placed at the junction of the end of leg 20 and the crease 32 to provide a butt joint between the two. The glue is applied by an apparatus shown schematically at 134 of Figure 9, and the preferred gluing apparatus is shwon in more detail in Figure 10.

With reference to Figure 10, a glue head 136 includes a nozzle 138 for dispensing glue, and head 136 is carried by a movable plate 140 of a linear motor 142. A guide rail 144 of the linerar motor extends across the machine shown in Figure 9, whereby glue nozzle 138 is caused to move along and directly above the joint between leg 20 and crease 32. A line of adhesive is deposited at that connection to secure the two parts together.

A beam 146, preferably from a 2000 watt carbon dioxide laser is directed onto a mirror 148 which is carried by movable plate 140 along with glue head 136. Beam 146 is passed through an anamorphic lens system 150 to form a linear focal line 152 on the line of glue laid down by nozzle 138. By spreading the beam out along the glue line to a width of approximately 25 to 50 mm, a large amount of energy can be transmitted to the glue without damaging the material.

The heating caused by the irradiation of the glue line 'drives' it into the material, thus ensuring a secure attachment of leg 20 to crease 32.

## Claims

1. A method of manufacturing an integral expandable, collapsible product having a row of parallelly arranged, transversely extending hollow cells therein, comprising the steps of folding a first and a second sheet (8,10) of flexible material to provide a plurality of first transverse creased pleats (14) therein, said first pleats (14) projecting to one side of the first sheet (8) and to one side of said second sheet (10), respectively, folding the first sheet and the second sheet to provide a plurality of folds (16,17) therein, each of said folds projecting to the other side of said first sheet (8) and said second sheet (10) respectively between two of said first transverse creased pleats (14), modifying at least certain of the folds (17) of the first sheet (8) by securing parts of said folded material together to form first legs (20), positioning said first and second sheets, so that the other side of said first sheet faces the other side of said second sheet, and characterised by combining said first and second sheets so that said first legs (20) are each secured at their free edges to the free edge of a separate fold (16,20) of said second sheet.

2. A method according to claim 1, wherein each fold (17) of the first sheet is so modified as to form a first leg (20).

3. A method according to claim 1, wherein certain other of the folds (16) of said first sheet are creased to provide second transverse creased pleats between and alternating with the first legs (20), in preselected order.

4. A method according to claim 3, wherein the second pleats (16) formed in said first sheet are given a lesser height than the first legs (20) formed in said first sheet (8).

5. A method according to any preceding claim, wherein at least certain of folds (16,17) of the second sheet (10) are creased to provide a plurality of second transverse creased pleats projecting to the other side of said second sheet.

6. A method according to claim 5, wherein each fold (16) of the second sheet (10) is creased to provide a second creased pleat.

7. A method according to any one of claims 1 to 5, wherein at least certain of the folds (17) of the second sheet (10) are modified by securing parts of said folded material together to form second legs (20) and, when said first and second sheet are combined, said second legs (20) each being secured to a separate fold (16) of said first sheet (8).

8. A method according to any one of claims 1 to 4, wherein each fold (17) of the second sheet (10) is modified by securing parts of said folded material together to form second legs (120) and, when said first and second sheets are combined, said second legs (20) are each secured to a separate fold (16) of said first sheet (8).

9. A method according to claim 7, when appendant to claim 5, wherein the second transverse creased pleats (16) and the second legs (20) of the second sheet (10) are formed alternately, in a preselected order.

10. A method according to claim 9 or to claim 7, when appendant to claim 5, wherein second pleats (16) formed in said second sheet (10) are given a lesser height than the second legs (20).

11. A method according to any one of claims 7, 8, 9 or 10, when appendant to claim 3, wherein each second leg (20) is secured to the first sheet by securing the free edge of said second leg (20) to the creased edge of an opposite side pleat (16) of said first sheet.

12. A method according to claim 5, or any claim appendant thereto, wherein each first leg is secured to the second sheet by securing the free edge of said first leg (20) to the creased edge of an opposite second plat (16) of said second sheet.

13. A method according to claim 7, 8, 9 or 10, wherein each first or second leg (20) is secured to the other sheet by securing the free edge of said first or second leg (20) to the free edge of an opposing leg (20) of said other sheet.

14. A method according to any preceding claim, wherein said step or steps of modifying said folds comprises placing a line of adhesive in said folds (17) and pressing said parts together.

15. A method according to any preceding claim, wherein the step of securing comprises placing a line of adhesive along the contact line of a first or second leg and/or along the relevant contact line of the other sheet and heating said line(s) of adhesive.

16. A method according to claim 15, wherein said adhesive is a hot-melt adhesive and said step of heating comprises irradiating said adhesive with electromagnetic radiation preferably with a laser beam forming a line on said adhesive.

17. A method according to any preceding claim, wherein the first and second sheets are identical and consist of pieces of one and the same sheet of material manufactured with the same machine or machines.

18. A method according to claim 7 or 8, or any claim appendant thereto, wherein the first and second sheets are both cut from one sheet of material, wherein the first and second sheet are oppositely positioned in mirror like fashion, with the first and second legs facing each other either in aligned or in offset-position at the location where the first and second sheets are combined and mutually secured.

19. An expandable, collapsible product e.g. for forming a window covering and having an integral row of parallelly arranged, transverse, hollow, cross-sectionally closed cells, comprising continuous first and second sheets (8,10), each sheet having a plurality of first transverse creased pleats (14) on one side of the sheet and a plurality of transverse continuous projections (16,17) on the other side of the sheet, at least some of the projections on at least one sheet being in the form of folds (17), part of said folds being secured together to form legs (20), characterised in that said first and second sheets (8,10) are fixedly secured together by securing legs (20) from one sheet to legs (20) or projections (16,17) on the other at the free edges of the legs and projections of the first and second sheets along the length thereof, so that a portion of the circumference of a cell, invisible from the front or back of the finished product and common to two immediately adjoining cells, comprises at any point two layers of a single sheet material, formed by doubling said sheet material back on itself and securing it together.

20. An expandable collapsible product according to claim 19, wherein the legs (20) are situated between each pair of adjacent first pleats (14) of both sheets, the free edge of each leg (20) of the first sheet (8) being secured to the free edge of a leg (20) of the second sheet (10), the joined legs forming the common portion of the circumference of two adjacent cells.

21. An expandable collapsible product according to claim 19, wherein the legs of the first sheet (8) are arranged alternately with the first pleats (14), the projections (16) of the second sheet (10) are in the form of second transverse creased pleats arranged alternately with the first pleats (14), the free edges of the legs (20) of the first sheet (8) being secured to the peaks of the second pleats (16) of the a second sheet (10), these legs forming the common portion of the circumferences of two adjacent cells.

22. An expandable collapsible product according to claim 19, wherein the projections of the first and second sheet (8,10) are in the form of second transverse creased pleats (16) and legs (20), said legs (20) having a greater height than the second pleats (16) and being alternately arranged with the second pleats in preselected order, the free ends of the legs (20) of the first sheet (8) being secured to the peaks of the second pleats (16) of the second sheet (10), the legs (20) of the second sheet (10) being joined in the same way with the second pleats (16) of the first sheet (8), the alternating legs from the first and second sheets forming the portions of the circumference of the common cell.

23. An expandable collapsible product according to any one of claims 19 to 22, wherein said first and second sheets are formed of opaque or semi-opaque material.

24. A retractable shade comprising one or two end rails, operating means and expandable and collapsible shade product according to any one of claims 19 to 23.

25. Apparatus for combining first and second sheets (8,10) of material transversely pleated and having projections (16,17), some of which, on at least one sheet are formed as folds (17), the parts of which are secured together to form legs (20), said apparatus comprising means for advancing said first and second sheets towards each other, indexing means (124,126) for engaging respective first pleats (14) in each of said first and second sheets (8,10) and for establishing a predetermined relative position between said first and second sheets, means (116,118) for positioning respective projections, legs and pleats in each of said first and second sheets in a predetermined (16) relative position, and means (138-144) for placing a line of adhesive on the edges of said projections (16) and/or legs (20) to secure said first and second sheets together, characterised by means securing the edges of the legs of one sheet to the edges of the legs or projections on the other sheet.

26. Apparatus according to claim 25, wherein said indexing means comprises first and second elongate plates (124,126) adapted to be received in a respective pleat (14) of said first and second sheets (8,10) and control means, e.g. comprising two cams (128,130), for causing the outer edge of each of said plates to move in an arc, whereby each of said plates engages a respective said first pleat (14), moves said first pleat to said predetermined position, moves away from said first pleat to release said first pleat, and moves upwardly to engage a subsequent first pleat.

27. Apparatus according to claim 25 or 26, wherein said means for positioning comprises two elongate, pivotally-mounted flaps (116,118) for engaging the top of a said projection (16) to position said projection.

28. Apparatus according to claim 25, 26 or 27, wherein said means (138-144) for placing a line of adhesive comprises a hot-melt adhesive nozzle (138) and track means (144) preferably operated by a linear motor (142) for moving said nozzle across said first and second sheets.

29. Apparatus according to claim 28 and further comprising means (144-150) for heating said adhesive after it has been despatched from said nozzle, said heating means preferably comprising means for directing a beam (146) of radiation onto said adhesive.

30. Apparatus according to claim 29, wherein the means for directing a beam (146) of radiation is a mirror (148) carried by the track means (144).

31. Apparatus according to claim 28, 29 or 30, wherein the track means (144) carries said nozzle (138), and the heating means comprises electromagnetic means (146-150) for irradiating hot melt adhesive after it has been dispensed by the nozzle, wherein said electromagnetic means is preferably in the form of a laser.

32. Apparatus according to any one of claims 25 to 31, further comprising apparatus for providing the transverse pleats and projections of at least two different heights in said sheets, said apparatus comprising knife edge means (62) extending across said material (10), pleat bar means (60) for engaging said material and urging said material against said knife edge means during a forward motion of said pleat bar to form a pleat, and means (64-74) for controlling the motion of said pleat bar means, to cause said pleat bar means to move alternatively first and second distances from said knife edge during rearward motions whereby said pleats of two different heights are formed.

33. Apparatus according to claim 32, wherein said means for controlling the motion of said pleat bar comprises a cam (72) having differently sized lobes (74,76) thereon.

34. Apparatus according to claim 32 or 33, further comprising heater means (84) for heating said material, said heater means including a bottom discharge heater for heating the lower surface of said material after it has been pleated, said bottom discharge heater comprising a flat stone, the stone preferably being granite.

35. Apparatus according to any one of claims 25 to 34 which further comprises apparatus for securing together parts of the folds in the sheet material (8,10), said apparatus comprising means (88-92,114) for advancing said piece of material, jaw means (98,100) for receiving said fold (17) and for pressing said parts together and adhesive applying means (99) for pressing adhesive in said fold before said jaw means presses said parts together.

36. Apparatus according to claim 35, wherein said jaw means comprises vacuum means (96) for applying a pressure differential to said fold to urge said fold into said jaw means.

37. Apparatus according to claim 35 or 36, wherein said adhesive means comprises a nozzle (99) mounted on a track means (108) for laying a line of hot-melt adhesive, said track means preferably comprising a linear motor (112).

38. Apparatus according to any one of claims 25 to 37, further comprising means for controlling the feed of the sheet material, comprising two laterally spaced support posts (38), a toothed rack (56) on each post, first and second carriages (36) each mounted on a respective post for movement along said posts, a shaft (52) connecting said carriages, said shaft having pinions at opposite ends (50) for engaging respective ones of said racks, and roller means for engaging said material and applying tension thereto.

**Revendications**

1. Procédé pour fabriquer un produit extensible repliable en un seul tenant comportant une rangée de cellules creuses s'étendant transversalement, disposées parallèlement dans celle-ci, comprenant les étapes consistant à plier une première et une seconde feuilles (8, 10) d'un matériau souple pour procurer une multitude de premiers plis froncés transversaux (14) dans celui-ci, les premiers plis (14) dépassant sur un côté de la première feuille (8) et sur un côté de la seconde feuille (10) respectivement, plier la première feuille et la seconde feuille pour procurer une multitude de plis (6, 17) dans celles-ci, chacun des plis dépassant sur l'autre côté de la première feuille (8) et de la seconde feuille (10), respectivement, entre deux des premiers plis froncés transversaux (14), modifier au moins certains des plis (17) de la première feuille (8) en fixant des parties du matériau plié ensemble pour former des premières jambes (20), positionner les première et seconde feuilles, de sorte que l'autre côté de la première feuille fait face à l'autre côté de la seconde feuille, et caractérisé par l'étape consistant à combiner les première et seconde feuilles de sorte que les premières jambes (20) sont chacune fixées à leurs bords libres au bord libre d'un pli séparé (16, 20) de la seconde feuille.

2. Procédé selon la revendication 1, dans lequel chaque pli (17) de la première feuille est modifié d'une manière telle à former une première jambe (20).

3. Procédé selon la revendication 1, dans lequel certains autres plis parmi les plis (16) de la première feuille sont froncés pour procurer des seconds plis froncés transversaux entre et alternés avec les premières jambes (20) dans l'ordre présélectionné.

4. Procédé selon la revendication 3, dans lequel les seconds plis (16) formés dans la première feuille sont produits à une hauteur moindre que les premières jambes (20) formées dans la première feuille (8).

5. Procédé selon l'une quelconque des revendications précédentes, dans lequel au moins certains des plis (16, 17) de la seconde feuille (10) sont froncés pour procurer une multitude de seconds plis froncés transversaux dépassant sur l'autre côté de la seconde feuille.

6. Procédé selon la revendication 5, dans lequel chaque pli (16) de la seconde feuille (10) est froncé pour procurer un second pli froncé.

7. Procédé selon l'une quelconque des revendications 1 à 5, dans lequel au moins certains des plis (17) de la seconde feuille (10) sont modifiés en fixant les parties ensemble du matériau plié pour former des secondes jambes (20) et lorsque les première et seconde feuilles sont combinées, les secondes jambes (20) sont chacunes fixées à un pli séparé (16) de la première feuille (8).

8. Procédé selon l'une quelconque des revendications 1 à 4, dans lequel chaque pli (17) de la seconde feuille (10) est modifié en fixant les parties ensemble du matériau plié pour former des secondes jambes (120) et, lorsque les première et seconde feuilles sont combinées, des secondes jambes (20) sont chacune fixées à un pli séparé (16) de la première feuille (8).

9. Procédé selon la revendication 7, lorsque annexée à la revendication 5, dans lequel les seconds plis froncés transversaux (16) et les secondes jambes (20) de la seconde feuille (10) sont formés de manière alternée dans un ordre présélectionné.

10. Procédé selon la revendication 9 ou selon la revendication 7, lorsque annexée à la revendication 5, dans lequel les seconds plis (6) lorsque formés dans la seconde feuille (10) sont produits à une hauteur moindre que les secondes jambes (20).

11. Procédé selon l'une quelconque des revendications 7, 8, 9 ou 10, lorsque annexée à la revendication 3, dans lequel chaque seconde jambe (20) est fixée à la première feuille en fixant le bord libre de la seconde jambe (20) au bord froncé d'un pli latéral opposé (16) de la première feuille.

12. Procédé selon la revendication 5, ou selon l'une quelconque des revendications annexées à celle-ci, dans lequel chaque première jambe est fixée à la seconde feuille en fixant le bord libre de la première jambe (20) au bord froncé d'un second pli opposé (16) de la seconde feuille.

13. Procédé selon la revendication 7, 8, 9 ou 10, dans lequel chaque première ou seconde jambe (20) est fixée à l'autre feuille en fixant le bord libre de la première ou seconde jambe (20) au bord libre d'une jambe opposée (20) de l'autre feuille.

14. Procédé selon l'une quelconque des revendications précédentes, dans lequel l'étape ou les étapes consistant à modifier les plis comprend le fait de placer une ligne d'adhésif dans les plis (17) et presser les parties ensemble.

15. Procédé selon l'une quelconque des revendications précédentes, dans lequel l'étape consistant à fixer comprend le placement d'une ligne d'adhésif suivant la ligne de contact d'une première ou d'une seconde jambe et/ou suivant la ligne de contact concernée de l'autre feuille et chauffer la ou les ligne(s) d'adhésif.

16. Procédé selon la revendication 15, dans lequel l'adhésif est un adhésif fondu à chaud et l'étape consistant à chauffer comprend l'exposition de l'adhésif à un rayonnement électromagnétique, de préférence avec un faisceau laser formant une ligne sur l'adhésif.

17. Procédé selon l'une quelconque des revendications précédentes, dans lequel les première et seconde feuilles sont identiques et sont constituées de pièces de chacune et de la même feuille de matériau fabriquée avec la même machine ou les mêmes machines.

**18.** Procédé selon la revendication 7 ou 8, ou toute revendication annexée à celle-ci, dans lequel les première et seconde feuilles sont toutes les deux découpées à partir d'une feuille de matériau, dans lequel les première et seconde feuilles sont positionnées de manière symétrique, avec les première et seconde jambes se faisant face l'une l'autre, soit en position alignée soit en position décalée à l'emplacement où les première et seconde feuilles sont combinées et mutuellement fixées.

**19.** Produit extensible repliable, par exemple pour former un store de fenêtre et comportant une rangée en un seul tenant de cellules creuses fermées transversales disposées en parallèle, comprenant des première et seconde feuilles en continu (8, 10), chaque feuille comportant une multitude de premiers plis froncés transversaux (14) sur un côté de la feuille et une multitude de saillies transversales continues (16, 17) sur l'autre côté de la feuille, au moins certaines des saillies sur au moins une feuille étant sous la forme de plis (17), une partie des plis étant fixée ensemble pour former des jambes (20), caractérisé en ce que les première et seconde feuilles (8, 10) sont fixées ensemble de manière sûre en fixant les jambes (20) d'une feuille aux jambes (20) ou saillies (16, 17) sur l'autre aux bords libres des jambes et des saillies des première et seconde feuilles suivant la longueur de celles-ci, de sorte qu'une partie de la circonférence d'une cellule, invisible de l'avant ou de l'arrière du produit fini et commune à deux cellules immédiatement contiguës, comprend en tout point deux couches d'un seul matériau de feuille, formé en doublant le matériau de feuille sur lui-même et en le fixant ensemble.

**20.** Produit extensible repliable selon la revendication 19, dans lequel les jambes (20) sont situées entre chaque paire des premiers plis adjacents (14) des deux feuilles, le bord libre de chaque jambe (20) de la première feuille (8) étant fixé au bord libre d'une jambe (20) de la seconde feuille (10), les jambes raccordées formant la partie commune de la circonférence des deux cellules adjacentes.

**21.** Produit extensible repliable selon la revendication 19, dans lequel les jambes de la première feuille (8) sont disposées alternées avec les premiers plis (14), les saillies (16) de la seconde feuille (10) sont sous la forme des seconds plis froncés transversaux disposés alternés avec les premiers plis (14), les bords libres des jambes (20) de la première feuille (8) étant fixés aux crêtes des seconds plis (16) de la seconde feuille (10), ces jambes formant la partie commune des circonférences de deux cellules adjacentes.

**22.** Produit extensible repliable selon la revendication 19, dans lequel les saillies des première et seconde feuilles (8, 10) sont sous la forme de seconds plis froncés transversaux (16) et de jambes (20), les jambes (20) ayant une hauteur plus grande que les seconds plis (16) et étant disposées alternées avec les seconds plis dans un ordre présélectionné, les extrémités libres des jambes (20) de la première feuille (8) étant fixées aux crêtes des seconds plis (16) de la seconde feuille (10), les jambes (20) de la seconde feuille (10) étant raccordées de la même manière avec les seconds plis (16) de la première feuille (8), les jambes alternées des première et seconde feuilles formant les parties de la circonférence de la cellule commune.

**23.** Produit extensible repliable selon l'une quelconque des revendications 19 à 22, dans lequel les première et seconde feuilles sont formées d'un matériau opaque ou semi-opaque.

**24.** Store rétractable comprenant un ou deux rails d'extrémité, un moyen de commande et un produit de protection extensible et repliable selon l'une quelconque des revendications 19 à 23.

**25.** Dispositif pour combiner des première et seconde feuilles (8, 10) d'un matériau transversalement plissé et comportant des saillies (16, 17), dont certaines sur au moins une feuille sont formées comme des plis (17), dont les parties sont fixées ensemble pour former des jambes (20), le dispositif comprenant un moyen pour avancer des première et seconde feuilles l'une vers l'autre, un moyen d'alignement (124, 126) pour mettre en contact les premiers plis respectifs (14) dans chacune des première et seconde feuilles (8, 10) et pour établir une position relative prédéterminée entre les première et seconde feuilles, un moyen (116, 118) pour positionner les saillies, jambes et plis respectifs dans chacune des première et seconde feuilles en une position relative prédéterminée (16) et un moyen (138 à 144) pour placer une ligne de colle sur les bords des saillies (16) et/ou des jambes (20) pour fixer les première et seconde feuilles ensemble, caractérisé par un moyen fixant les bords des jambes d'une feuille aux bords des jambes ou saillies sur une autre feuille.

**26.** Dispositif selon la revendication 25, dans lequel le moyen d'alignement comprend des première et seconde plaques allongées (124, 126) prévues pour être reçues dans un pli respectif (14) des première et seconde feuilles (8, 10), et un moyen de commande, par exemple comprenant deux cames (128, 130) pour amener le bord extérieur de chacune des plaques à se déplacer suivant un arc, si bien que chacune des plaques vient en contact d'un premier pli respectif (14), déplace le premier pli à la position prédéterminée, se déplace loin du premier pli pour libérer le premier pli et se déplace vers le haut pour venir en contact avec un premier pli suivant.

**27.** Dispositif selon la revendication 25 ou 26, dans lequel le moyen pour positionner comprend deux volets allongés montés de manière pivotante (116, 118) pour mettre en prise le sommet d'une saillie (16) afin de positionner la saillie.

**28.** Dispositif selon la revendication 25, 26 ou 27, dans lequel le moyen (138 à 144) pour placer une ligne d'adhésif comprend une buse de production d'adhésif fondu à chaud (138) et un moyen de suivi (144) commandé de préférence par un moteur linéaire (142) pour déplacer la buse à travers les première et seconde feuilles.

**29.** Dispositif selon la revendication 28 et comprenant de plus un moyen (144 à 150) pour chauffer l'adhésif après qu'il ait été délivré par la buse, le moyen de chauffage comprenant de préférence un moyen pour diriger un faisceau (146) de rayonnement sur l'adhésif.

**30.** Dispositif selon la revendication 29, dans lequel le moyen pour diriger le faisceau (146) de rayonnement est un miroir (148) supporté par le moyen de suivi (144).

**31.** Dispositif selon la revendication 28, 29 ou 30, dans lequel le moyen de suivi (144) supporte la buse (138) et le moyen de chauffage comprend un moyen électromagnétique (146 à 150) pour rayonner sur l'adhésif fondu à chaud après qu'il ait été délivré par la buse, dans lequel le moyen électromagnétique est de préférence sous la forme d'un laser.

**32.** Dispositif selon l'une quelconque des revendications 25 à 31, comprenant de plus un dispositif pour délivrer des plis transversaux et des saillies transversales d'au moins deux hauteurs différentes dans les feuilles, le dispositif comprenant un moyen de tranchant de couteau (62) s'étendant à travers le matériau (10), un moyen de barre à plisser (160) pour venir en contact avec le matériau et pour pousser le matériau contre le moyen de tranchant de couteau pendant un déplacement vers l'avant de la barre à plisser pour former un pli, et un moyen (64 à 74) pour commander le déplacement du moyen de barre à plisser, afin d'amener le moyen de barre à plisser à se déplacer alternativement d'une première et seconde distances à partir du tranchant de couteau pendant le déplacement vers l'arrière, si bien que les plis de deux hauteurs différentes sont formés.

**33.** Dispositif selon la revendication 32, dans lequel le moyen pour commander le déplacement de la barre à plisser comprend une came (72) comportant des bossages différemment dimensionnés (74, 76) sur celle-ci.

**34.** Dispositif selon la revendication 32 ou 33, comprenant de plus un moyen de chauffage (84) pour chauffer le matériau, le moyen de chauffage comportant un dispositif de chauffage inférieur pour chauffer la surface inférieure du matériau après qu'il ait été plissé, le dispositif de chauffage inférieur comprenant une pierre plate, la pierre étant de préférence du granit.

**35.** Dispositif selon l'une quelconque des revendications 25 à 34, qui comprend de plus un dispositif pour fixer ensemble les parties des plis dans le matériau de feuille (8, 10), le dispositif comprenant un moyen (88 à 92, 114) pour avancer la pièce de matériau, un moyen de mâchoires (98, 100) pour recevoir le pli (17) et pour presser les parties ensemble et un moyen d'application d'adhésif (99) pour presser l'adhésif dans le pli avant que le moyen de mâchoire presse les parties ensemble.

**36.** Dispositif selon la revendication 35, dans lequel le moyen de mâchoires comprend un moyen à dépression (96) pour appliquer une différence de pression au pli pour pousser le pli dans le moyen de mâchoires.

**37.** Dispositif selon la revendication 35 ou 36, dans lequel le moyen d'adhésif comprend une buse (99) montée sur un moyen de suivi (108) pour déposer une ligne d'adhésif fondu à chaud, le moyen de suivi comprenant de préférence un moteur linéaire (112).

**38.** Dispositif selon l'une quelconque des revendications 25 à 37, comprenant de plus un moyen pour commander l'avancée du matériau de feuille, comprenant deux colonnes de support latéralement espacées (38), une crémaillère (56) sur chaque colonne, des premier et second chariots (106) montés chacun sur une colonne respective pour déplacement suivant les colonnes, un arbre (52) reliant les chariots, l'arbre comportant des pignons aux extrémités opposées (50) pour mettre en prise les crémaillères respectives parmi les crémaillères, un moyen de rouleau pour mettre en prise le matériau et appliquer une tension à celui-ci.

**Patentansprüche**

1. Verfahren zur Herstellung eines einheitlichen dehnbaren zusammenklappbaren Gegenstandes, der eine Reihe von parallel angeordneten, quer verlaufenden Hohlzellen aufweist, mit den nachfolgenden Schritten: Falten einer ersten und zweiten Lage (8, 10) aus flexiblem Material, um eine Vielzahl von ersten Querfalten (14) darin vorzusehen, die in Richtung auf eine Seite der ersten Lage (8) und eine Seite der zweiten Lage (10) vorstehen, Falten der ersten Lage und der zweiten Lage, um eine Vielzahl von Falten (16, 17) darin vorzusehen, von denen jede zur anderen Seite der ersten Lage (8) und der zweiten Lage (10) zwischen zwei der ersten Querfalten (14) vorsteht, Modifizieren von mindestens einigen Falten (17) der ersten Lage (8) durch Befestigen von Teilen des gefalteten Materiales aneinander, um erste Schenkel (20) auszubilden, und Positionieren der ersten und zweiten Lage derart, daß die andere Seite der ersten Lage zur anderen Seite der zweiten Lage weist, dadurch gekennzeichnet, daß die erste und zweite Lage so miteinander vereinigt werden, daß die ersten Schenkel (20) jeweils an ihren freien Rändern am freien Rand einer separaten Falte (16, 20) der zweiten Lage befestigt werden.

2. Verfahren nach Anspruch 1, bei dem jede Falte (17) der ersten Lage so modifiziert wird, daß sie einen ersten Schenkel (20) bildet.

3. Verfahren nach Anspruch 1, bei dem bestimmte andere Falten (16) der ersten Lage gefaltet werden, um zweite Querfalten zwischen den ersten Schenkeln (20) und sich mit diesen abwechselnd in einer vorgewählten Reihenfolge auszubilden.

4. Verfahren nach Anspruch 3, bei dem die in der ersten Lage ausgebildeten zweiten Falten (16) mit einer geringeren Höhe versehen werden als die in der ersten Lage (8) ausgebildeten ersten Schenkel (20).

5. Verfahren nach einem der vorangehenden Ansprüche, bei dem mindestens einige der Falten (16, 17) der zweiten Lage (10) gefaltet werden, um eine Vielzahl von zweiten Querfalten vorzusehen, die in Richtung auf die andere Seite der zweiten Lage vorstehen.

6. Verfahren nach Anspruch 5, bei dem jede Falte (16) der zweiten Lage (10) gefaltet wird, um eine zweite Falte vorzusehen.

7. Verfahren nach einem der Ansprüche 1 bis 5, bei dem mindestens einige der Falten (17) der zweiten Lage (10) modifiziert werden, indem Teile des gefalteten Materiales aneinander befestigt werden, um zweite Schenkel (20) auszubilden, und indem die zweiten Schenkel (20) nach der Vereinigung der ersten und zweiten Lage jeweils an einer separaten Falte (16) der ersten Lage (8) befestigt werden.

8. Verfahren nach einem der Ansprüche 1 bis 4, bei dem jede Falte (17) der zweiten Lage (10) modifiziert wird, indem Teile des gefalteten Materiales aneinander befestigt werden, um zweite Schenkel (120) auszubilden, und indem die zweiten Schenkel (20) nach Vereinigung der ersten und zweiten Lage jeweils an einer separaten Falte (16) der ersten Lage (8) befestigt werden.

9. Verfahren nach Anspruch 7 in Verbindung mit Anspruch 5, bei dem die zweiten Querfalten (16) und die zweiten Schenkel (20) der zweiten Lage (10) abwechselnd in einer vorgewählten Reihenfolge ausgebildet werden.

10. Verfahren nach Anspruch 9 oder Anspruch 7 in Verbindung mit Anspruch 5, bei dem die in der zweiten Lage (10) gebildeten zweiten Falten (16) mit einer geringeren Höhe versehen werden als die zweiten Schenkel (20).

11. Verfahren nach einem der Ansprüche 7, 8, 9 oder 10 in Verbindung mit Anspruch 3, bei dem jeder zweite Schenkel (20) an der ersten Lage befestigt wird, indem der freie Rand des zweiten Schenkels (20) am gefalteten Rand einer Falte (16) der ersten Lage auf der gegenüberliegenden Seite befestigt wird.

12. Verfahren nach Anspruch 5 oder irgendeinem Anspruch in Verbindung damit, bei dem jeder erste Schenkel an der zweiten Lage befestigt wird, indem der freie Rand des ersten Schenkels (20) am gefalteten Rand einer gegenüberliegenden zweiten Falte (16) der zweiten Lage befestigt wird.

13. Verfahren nach Anspruch 7, 8, 9 oder 10, bei dem jeder erste oder zweite Schenkel (20) an der anderen Lage befestigt wird, indem der freie Rand des ersten oder zweiten Schenkels (20) am freien Rand eines gegenüberliegenden Schenkels (20) der anderen Lage befestigt wird.

14. Verfahren nach einem der vorangehenden Ansprüche, bei dem der Schritt oder die Schritte zum Modifizieren der Falten das Aufbringen einer Klebstofflinie in den Falten (17) und das Zusammenpressen der Teile umfaßt.

15. Verfahren nach einem der vorangehenden Ansprüche, bei dem der Schritt des Befestigens das Aufbringen einer Klebstofflinie entlang der Kontaktlinie eines ersten oder zweiten Schenkels und/oder entlang der relevanten Kontaktlinie der anderen Lage und das Erhitzen der Klebstofflinie bzw. Klebstofflinien umfaßt.

16. Verfahren nach Anspruch 15, bei dem der Klebstoff ein Heißschmelzkleber ist und der Schritt des Erhitzens das Beaufschlagen des Klebstoffes mit elektromagnetischer Strahlung, vorzugsweise mit einem Laserstrahl, umfaßt, derart, daß eine Linie auf dem Klebstoff gebildet wird.

17. Verfahren nach einem der vorangehenden Ansprüche, bei dem die erste und zweite Lage identisch sind und aus Stücken von ein und derselben Materiallage bestehen, die mit der gleichen Maschine oder mit den gleichen Maschinen hergestellt wurde.

18. Verfahren nach Anspruch 7 oder 8 oder einem Anspruch in Verbindung damit, bei dem die erste und zweite Lage von einer Materiallage abgetrennt werden und bei dem die erste und zweite Lage spiegelbildlich zueinander gegenüber angeordnet werden, wobei der erste und zweite Schenkel in einer ausgerichteten oder in einer versetzten Position an der Stelle gegeneinanderweisen, an der die erste und zweite Lage vereinigt und aneinander befestigt werden.

19. Dehnbarer zusammenklappbarer Gegenstand zur Ausbildung einer Fensterabdeckung mit einer einheitlichen Reihe von parallel angeordneten, quer verlaufenden, im Querschnitt geschlossenen Hohlzellen, die kontinuierliche erste und zweite Lagen (8, 10) umfassen, wobei jede Lage eine Vielzahl von Querfalten (14) auf einer Seite der Lage und eine Vielzahl von quer verlaufenden kontinuierlichen Vorsprüngen (16, 17) auf der anderen Seite der Lage besitzt und mindestens einige der Vorsprünge auf mindestens einer Lage die Form von Falten (17) aufweisen, wobei ein Teil der Falten zur Ausbildung von Schenkeln (20) aneinander befestigt ist, dadurch gekennzeichnet, daß die erste und zweite Lage (8, 10) aneinander befestigt sind, indem Schenkel (20) von einer Lage an Schenkeln (20) oder Vorsprüngen (16, 17) an der anderen Lage an den freien Rändern der Schenkel und Vorsprünge der ersten und zweiten Lage entlang deren Länge befestigt sind, so daß ein Abschnitt des Umfangs einer Zelle, der von der Vorderseite oder Rückseite des fertigen Gegenstandes unsichtbar und zwei unmittelbar benachbarten Zellen gemeinsam ist, an jedem Punkt zwei Schichten aus einem einlagigen Material umfaßt, die durch Umschlagen des Lagenmateriales und Befestigen desselben aneinander ausgebildet sind.

20. Dehnbarer zusammenklappbarer Gegenstand nach Anspruch 19, bei dem die Schenkel (20) zwischen jedem Paar von benachbarten ersten Falten (14) beider Lagen angeordnet sind, wobei der freie Rand eines jeden Schenkels (20) der ersten Lage (8) am freien Rand eines Schenkels (20) der zweiten Lage (10) befestigt ist und wobei die miteinander verbundenen Schenkel den gemeinsamen Abschnitt des Umfangs der beiden benachbarten Zellen bilden.

21. Dehnbarer zusammenklappbarer Gegenstand nach Anspruch 19, bei dem die Schenkel der ersten Lage (8) abwechselnd mit den ersten Falten (14) angeordnet sind, die Vorsprünge (16) der zweiten Lage (10) die Form von zweiten Querfalten besitzen, die abwechselnd mit den ersten Falten (14) angeordnet sind, und die freien Ränder der Schenkel (20) der ersten Lage (8) an den Spitzen der zweiten Falten (16) einer zweiten Lage (10) befestigt sind, wobei diese Schenkel den gemeinsamen Abschnitt des Umfanges von zwei benachbarten Zellen bilden.

22. Dehnbarer zusammenklappbarer Gegenstand nach Anspruch 19, bei dem die Vorsprünge der ersten und zweiten Lage (8, 10) die Form von zweiten Querfalten (16) und Schenkeln (20) besitzen, die Schenkel (20) eine größere Höhe als die zweiten Falten (16) aufweisen und abwechselnd mit den zweiten Falten in einer vorgewählten Reihenfolge angeordnet sind, die freien Enden der Schenkel (20) der ersten Lage (8) an den Spitzen der zweiten Falten (16) der zweiten Lage (10) befestigt sind und die Schenkel (20) der zweiten Lage (10) in der gleichen Weise mit den zweiten Falten (16) der ersten Lage (8) verbunden sind, wobei die sich abwechselnden Schenkel von der ersten und zweiten Lage die Abschnitte des Umfangs der gemeinsamen Zelle bilden.

23. Dehnbarer zusammenklappbarer Gegenstand nach einem der Ansprüche 19 bis 22, bei dem die erste und zweite Lage aus opakem oder halbopakem Material hergestellt sind.

24. Zurückziehbare Abdeckung mit einer oder zwei Endschienen, Betätigungseinrichtungen und einem dehnbaren und zusammenklappbaren Abdeckungsgegenstand nach einem der Ansprüche 19 bis 23.

25. Vorrichtung zum Vereinigen einer ersten und zweiten Lage (8, 10) aus Material, die in Querrichtung gefaltet sind und Vorsprünge (16, 17) besitzen, von denen einige auf mindestens einer Lage als Falten (17) ausgebildet sind, deren Teile aneinander befestigt sind, um Schenkel (20) auszubilden, mit Einrichtungen zum Bewegen der ersten und zweiten Lage gegeneinander, Positionier- bzw. Indexiereinrichtungen (124, 126) zum Einfügen von entsprechenden ersten Falten (14) in jede der ersten und zweiten Lage (8, 10) und zum Herstellen einer vorgegebenen Relativlage zwischen der ersten und zweiten Lage, Einrichtungen (116, 118) zum Positionieren von entsprechenden Vorsprüngen, Schenkeln und Falten in jeder der ersten und zweiten Lage in einer vorgegebenen (16) Relativposition und Einrichtungen (138 - 144) zum Aufbringen einer Klebstofflinie auf die Ränder der Vorsprünge (16) und/oder Schenkel (20), um die erste und zweite Lage aneinander zu befestigen, gekennzeichnet durch Einrichtungen zur Befestigung der Ränder der Schenkel von einer Lage an den Rändern der Schenkel oder Vorsprünge der anderen Lage.

26. Vorrichtung nach Anspruch 25, bei der die Positionier- bzw. Indexiereinrichtungen erste und zweite Längsplatten (124, 126) aufweisen, die in einer entsprechenden Falte (14) der ersten und zweiten Lage (8, 10) aufgenommen werden, und Steuereinrichtungen mit zwei Nocken (128, 130), damit sich der äußere Rand einer jeden Platte bogenförmig bewegt, wobei jede Platte mit einer entsprechenden ersten Falte (14) in Eingriff tritt, die erste Falte in die vorgegebene Position bewegt, sich von der ersten Falte wegbewegt und diese freigibt und sich nach oben bewegt, um mit einer nachfolgenden ersten Falte in Eingriff zu treten.

27. Vorrichtung nach Anspruch 25 oder 26, bei der die Einrichtungen zum Positionieren zwei längliche, schwenkbar montierte Klappen (116, 118) aufweisen, die mit dem oberen Ende eines Vorsprunges (16) in Eingriff treten, um diesen zu positionieren.

28. Vorrichtung nach Anspruch 25, 26 oder 27, bei dem die Einrichtungen (138 - 144) zum Aufbringen einer Klebstofflinie eine Düse (138) für einen Heißschmelzkleber und Bahneinrichtungen (144) umfassen, die vorzugsweise durch einen Linearmotor (142) betätigt werden, um die Düse über die erste und zweite Lage zu bewegen.

29. Vorrichtung nach Anspruch 28, die desweiteren Einrichtungen (144 -150) zum Erhitzen des Klebstoffs, nachdem dieser von der Düse abgegeben worden ist, umfaßt, wobei die Einrichtungen zum Erhitzen vorzugsweise Einrichtungen zum Richten eines Strahles (146) einer Strahlung auf den Klebstoff aufweisen.

30. Vorrichtung nach Anspruch 29, bei der die Einrichtungen zum Richten eines Strahles (146) einer Strahlung durch einen Spiegel (148) gebildet sind, der von den Bahneinrichtungen (144) getragen wird.

31. Vorrichtung nach Anspruch 28, 29 oder 30, bei der die Bahneinrichtungen (144) die Düse (138) tragen und die Einrichtungen zum Erhitzen elektromagnetische Einrichtungen (146 - 150) zum Bestrahlen des Heißschmelzklebers, nachdem dieser von der Düse abgegeben worden ist, umfassen, wobei die elektromagnetischen Einrichtungen vorzugsweise die Form eines Lasers besitzen.

32. Vorrichtung nach einem der Ansprüche 25 bis 31, die desweiteren eine Vorrichtung zur Herstellung der Querfalten und Vorsprünge mit mindestens zwei unterschiedlichen Höhen in jeder Lage umfaßt, welche Messerkanteneinrichtungen (62), die sich quer über das Material (10) erstrecken, Faltstabeinrichtungen (60), die mit dem Material in Eingriff treten und dieses gegen die Messerkanteneinrichtungen während einer Vorwärtsbewegung des Faltstabes drücken, um eine Falte auszubilden, und Einrichtungen (64 - 74) zum Steuern der Bewegung der Faltstabeinrichtungen aufweist, damit sich die Faltstabeinrichtungen abwechselnd über eine erste und zweite Strecke von der Messerkante aus während rückwärts gerichteter Bewegungen bewegen, so daß auf diese Weise die Falten mit zwei unterschiedlichen Höhen gebildet werden.

33. Vorrichtung nach Anspruch 32, bei der die Einrichtungen zum Steuern der Bewegung des Faltstabes einen Nocken (72) umfassen, der unterschiedlich große Kurven (74, 76) aufweist.

34. Vorrichtung nach Anspruch 32 oder 33, die desweiteren Heizeinrichtungen (84) zum Erhitzen des Materiales umfaßt, die eine Heizeinrichtung mit Abgabe von Wärmeenergie nach unten aufweisen, um die untere Fläche des Materiales zu erhitzen, nachdem es gefaltet worden ist, wobei die Heizeinrichtung einen ebenen Stein, der vorzugsweise aus Granit besteht, besitzt.

35. Vorrichtung nach einem der Ansprüche 25 bis 34, die desweiteren eine Vorrichtung zur Befestigung der Teile der Falten im Lagenmaterial (8, 10) aneinander aufweist, die Einrichtungen (88 - 92, 114) zum Vorbewegen des Materialstücks, Klaueneinrichtungen (98, 100) zum Aufnehmen der Falte (17) und zum Zusammenpressen der Teile und Klebstoffaufbringungseinrichtungen (99) zum Pressen von Klebstoff in die Falte, bevor die Klaueneinrichtungen die Teile zusammenpressen, aufweist.

36. Vorrichtung nach Anspruch 35, bei dem die Klaueneinrichtungen Unterdruckeinrichtungen (96) zur Aufbringung einer Druckdifferenz auf die Falte, um diese in die Klaueneinrichtungen zu pressen, besitzen.

37. Vorrichtung nach Anspruch 35 oder 36, bei dem die Klebstoffaufbringungseinrichtungen eine Düse (99) umfassen, die auf einer Bahneinrichtung (108) zum Erstellen einer Linie aus Heißschmelzkleber montiert ist, wobei die Bahneinrichtung vorzugsweise einen Linearmotor (112) aufweist.

38. Vorrichtung nach einem der Ansprüche 25 bis 37, die desweiteren Einrichtungen zum Steuern der Vorschubgeschwindigkeit des Lagenmateriales umfaßt, welche zwei seitlich beabstandete Lagerpfosten (38), ein Zahngestänge (56) an jedem Pfosten, einen ersten und zweiten Schlitten (36), die jeweils an einem entsprechenden Pfosten zur Durchführung einer Bewegung entlang der Pfosten montiert sind, eine Welle (52), die die Schlitten miteinander verbindet und Ritzel an gegenüberliegenden Enden (50) zum Kämmen mit entsprechenden Zahngestängen besitzt, und Rolleneinrichtungen aufweisen, um mit dem Material in Eingriff zu treten und auf dieses eine Zugkraft aufzubringen.

# Fig.1.

# Fig.2.

Fig.3.

Fig.4.

## Fig.5.

## Fig.6.

## Fig.7.

## Fig.8

Fig.9.

Fig.10.

Fig .11

Fig .12.

Fig .13.